# EUROPEAN PATENT APPLICATION

(11) **EP 2 375 192 A2**
(43) Date of publication of application: **12.10.2011**
(21) Application number: 10180509.1
(22) Date of filing: 28.09.2010
(51) Int. Cl.: F25B 31/00, F25B 13/00, F25B 49/02

(54) **Air-conditioning apparatus**

(30) Priority: 25.02.2010 JP 2010041075
(71) Applicant: Mitsubishi Heavy Industries, Ltd., Tokyo 108-8215 (JP)
(72) Inventor: Watanabe, Satoshi, Tokyo 108-8215 (JP); Maeno, Masashi, Tokyo 108-8215 (JP); Nakamoto, Masahiko, Tokyo 108-8215 (JP); Mitoma, Keisuke, Tokyo 108-8215 (JP)
(74) Representative: Intès, Didier Gérard André

(57) **Abstract**

The air-conditioning apparatus includes compressors (13A) and (13B) having an oil equalizing pipe (45), an accumulator (29), feedback piping (43A) and (43B) that supply liquid refrigerant in the accumulator (29) to the suction side of the compressors (13A) and (13B), and a controller (51) having an oil-equalizing control mode (53) in which the amounts of lubricating oil stored individually in the compressors (13A) and (13B) are kept at or above a certain level. The oil-equalizing control mode (53) includes a feedback step of setting the rotation speeds of the compressors (13A) and (13B) to a working rotation speed and supplying the liquid refrigerant from the accumulator (29) to the compressors (13A) and (13B), and an oil equalizing step of increasing or decreasing the rotation speeds of the compressors (13A) and (13B) from an operating rotation speed by a rotation speed difference so that the rotation speeds differ from each other. The feedback work amount of the feedback step is changed in accordance with the dilution level of the lubricating oil in the liquid refrigerant in the accumulator (29), and the oil-equalizing work amount of the oil equalizing step is changed in accordance with the dilution level of the lubricating oil in the compressors.

## Description

### BACKGROUND OF THE INVENTION

### 1. FIELD OF THE INVENTION

The present invention relates to air-conditioning apparatuses.
This application is based on Japanese Patent Application No. 2010-0411075, the content of which is incorporated herein by reference.

### 2. DESCRIPTION OF RELATED ART

Conventionally, air-conditioning apparatuses of the type in which a plurality of compressors are connected in parallel to a refrigeration cycle and refrigerant is supplied to a large number of indoor units are widely used.
In the case of this type of air-conditioning apparatus, depending on the number of indoor units in operation, the air-conditioning ability, i.e., the amount of refrigerant flowing, changes considerably. Since lubricating oil in the compressors is diluted in the refrigerant and flows through the refrigeration cycle, the distribution of lubricating oil changes considerably with change in the amount of refrigerant flowing. Since it is not possible to determine to which compressor the lubricating oil circulated in the refrigeration cycle returns, in the case where a plurality of compressors are connected, there has been a risk that the oil distribution becomes non-uniform, causing a shortage of lubricating oil. The tendency for a non-uniform oil distribution has been even more severe and problematic in air conditioning apparatuses of the type in which a plurality of outdoor units are connected in parallel.

In order to overcome this problem, oil equalizing control is performed repeatedly at predetermined intervals so that the amounts of lubricating oil stored in the plurality of compressors become substantially equivalent.
In the oil equalizing control, the plurality of compressors are caused to rotate with a predetermined rotation speed difference. Thus, a difference occurs in the pressure loss of gas refrigerant suctioned into the individual compressors, so that a pressure difference occurs in the interiors of the compressors (lubricating-oil storage units). With the difference in internal pressure among the compressors, the lubricating oil moves through an oil equalizing pipe interconnecting the having the pressure difference, so that the amounts of lubricating oil in the individual compressors can be made substantially equivalent.

At this time, for example, as disclosed in Japanese Unexamined Patent Application, Publication No. Hei 1-203855, operation is performed with the pressure difference reversed, and this operation is repeated.
According to Japanese Unexamined Patent Application, Publication No. Hei 1-203855, the time intervals for performing oil equalizing control are adjusted based on the viscosity of the lubricating oil in the compressors and the condition of dilution of the refrigerant in the lubricating oil.
In order to keep the amounts of lubricating oil individually stored in the plurality of compressors at or above a certain level, i.e., in order to maintain the overall amount of lubricating oil, in the oil equalizing control, a feedback operation is performed, in which, prior to the oil equalizing operation described above, the rotation speeds of the compressors are set to a predetermined rotation speed, usually an increased rotation speed, and lubricating oil dilute liquid refrigerant stored in the accumulator is fed back to the compressors.

In the conventional oil equalizing control, the rotation speed difference in the oil equalizing operation and the predetermined rotation speed in the feedback operation are fixed values.
These values are set so that oil equalizing can be performed reliably irrespective of conditions of the operation status of the air-conditioning apparatus, i.e., the values are set based on the strictest conditions for performing oil equalizing (conditions with which oil movement is hardest). Therefore, excessive values are set in some cases.
In the oil equalizing control, the compressors are operated at a rotation speed that is different from a rotation speed (hereinafter referred to as an operating rotation speed) set to provide fine comfort (conditioned-air feeling). Thus, comfort is compromised temporarily on the side of indoor units. This effect increases when excessive values are set for the rotation speed difference and the predetermined rotation speed. Therefore, when the amount of refrigerant circulated at the compressor rotation speed during oil equalizing control does not match the load on the indoor side, there are cases where comfort (conditioned-air feeling) is considerably deteriorated or protective control is activated.

### BRIEF SUMMARY OF THE INVENTION

In view of the situation described above, it is an object of the present invention to provide an air-conditioning apparatus in which the amount of work for oil equalizing control is changed in accordance with the ease of movement of lubricating oil, so that considerable diminishment of comfort can be suppressed and entry into protective control can be prevented during oil equalizing control.

In order to achieve the object, the present invention employs the following solutions.
An aspect of the present invention is an air-conditioning apparatus including a plurality of compressors with variable rotation speeds, connected with each other via an oil equalizing pipe; an accumulator that separates a liquid refrigeration component from refrigerant suctioned into an suction side of the compressors and that stores liquid refrigerant diluted in lubricating oil; a supply pipe that gradually supplies the liquid refrigerant stored in the accumulator to the suction side of the compressors; and a controller that controls operation, having an oil-equalizing control mode in which the amounts of lubricating oil stored individually in the plurality of compressors are kept at or above a certain level, wherein the oil-equalizing control mode includes a feedback step of setting the rotation speeds of the compressors to a working rotation speed and supplying the liquid refrigerant from the accumulator to the individual compressors, and an oil equalizing step of increasing or decreasing the rotation speeds of the compressors from an operating rotation speed by a predetermined rotation speed so that the rotation speeds differ from each other, thereby making the amounts of lubricating oil in the compressors substantially equivalent to each other via the oil equalizing pipe, the feedback work amount of the feedback step being changed in accordance with the dilution level of the lubricating oil in the liquid refrigerant in the accumulator, the oil-equalizing work amount of the oil equalizing step being changed in accordance with the dilution level of the lubricating oil in the compressors.

With the air-conditioning apparatus according to this aspect, for example, the controller enters the oil-equalizing control mode at predetermined intervals, In the oil-equalizing control mode, the feedback step is performed, in which the rotation speeds of the compressors are set to the working rotation speed and the liquid refrigerant from the accumulator is supplied to the individual compressors. Then, in the oil-equalizing control mode, the oil-equalizing step is performed, in which the rotation speeds of the compressors are increased or decreased from the operating rotation speed by the predetermined rotation speed so that the rotation speeds differ from each other, thereby moving the lubricating oil to and from each other via the oil equalizing pipe so that the amounts of lubricating oil in the compressors become substantially equivalent to each other.
Prior to entry into the oil-equalizing control mode, preferably, oil return control is performed so that a sufficient amount of oil is stored in the accumulator.

The inventors discovered that the amount of movement of lubricating oil, i.e., the ease of oil movement, changes with the dilution level of lubricating oil, represented by the amount of refrigerant divided by the sum of the amount of refrigerant and the amount of lubricating oil: i.e., it becomes harder for the lubricating oil to move as the dilution level becomes higher, whereas it becomes easier for the lubricating oil to move as the dilution level becomes lower.
In the oil-equalizing control mode according to this aspect, the feedback work amount of the feedback step is set in accordance with the dilution level of the lubricating oil in the liquid refrigerant in the accumulator. As the dilution level of the lubricating oil in the liquid refrigerant in the accumulator becomes lower, since it becomes easier for the lubricating oil to move, the feedback work amount is decreased.
The oil-equalizing work amount of the oil equalizing step is set in accordance with the dilution level of the lubricating oil in the compressors. As the dilution level of the lubricating oil in the compressors becomes lower, since it becomes easier for the lubricating oil to move, the oil-equalizing work amount is decreased.
As described above, the feedback work amount and the oil-equalizing work amount are set in accordance with the dilution levels of the lubricating oil in the accumulator and the compressors. That is, the feedback work amount and the oil-equalizing work amount do not become unnecessarily large. Thus, compared with the case where the setting is based on the generally strictest conditions for performing oil equalizing, the effect of oil equalizing control can be alleviated. Accordingly, considerable diminishment of comfort can be suppressed and entry into protective control can be prevented during oil equalizing control.

In the above aspect, in the oil-equalizing control mode, the feedback work amount and the oil-equalizing work amount may be changed by changing the working rotation speed and the predetermined rotation speed.

The feedback work amount is represented by the product of the working rotation speed indicating the performance of the compressors per unit time and the working time of the feedback step. The oil-equalizing work amount is represented by the product of the predetermined rotation speed indicating change in the performance of the compressors per unit time and the working time of the oil equalizing step.
Therefore, it is possible to change the feedback work amount and the oil-equalizing work amount by changing the working rotation speed and the predetermined rotation speed.
As described above, the working rotation speed and the predetermined rotation speed are set in accordance with the dilution levels of the lubricating oil in the accumulator and the compressors. That is, the working rotation speed and the predetermined rotation speed do not become unnecessarily large. Thus, compared with the case where the setting is based on the generally strictest conditions for performing oil equalizing, variation of the rotation speeds can be suppressed, so that the effect due to considerable variation of the rotation speeds can be alleviated. Accordingly, considerable diminishment of comfort can be suppressed and entry into protective control can be prevented during oil equalizing control.

In the above aspect, in the oil-equalizing control mode, the feedback work amount and the oil-equalizing work amount may be changed by changing the working time of the feedback step and the working time of the oil equalizing step.

The feedback work amount is represented by the product of the working rotation speed indicating the performance of the compressors per unit time and the working time of the feedback step. The oil-equalizing work amount is represented by the product of the predetermined rotation speed indicating change in the performance of the compressors per unit time and the working time of the oil equalizing step.
Therefore, it is possible to change the feedback work amount and the oil-equalizing work amount by changing the working time of the feedback step and the working time of the oil equalizing step.
As above, the working time of the feedback step and the working time of the oil equalizing step are set in accordance with the dilution levels of the lubricating oil in the accumulator and the compressors. That is, the feedback work amount and the oil-equalizing work amount do not become unnecessarily large. Thus, compared with the case where the setting is based on the generally strictest conditions for performing oil equalizing, the working times can be reduced, so that the effect due to considerable variation of the rotation speeds can be alleviated. Accordingly, considerable diminishment of comfort can be suppressed and entry into protective control can be prevented during oil equalizing control.

In the above aspect, in the oil-equalizing control mode, it may be determined that the dilution level of the lubricating oil in the liquid refrigerant in the accumulator becomes lower as the elapsed time since execution of oil return control becomes longer.

When oil return control is performed, the lubricating oil is returned to the accumulator. At that time, a considerable amount of liquid refrigerant is mixed with the lubricating oil. Then, in the accumulator, the liquid refrigerant decreases more than the lubricating oil decreases. Therefore, it is possible to determine that the dilution level of the lubricating oil in the liquid refrigerant in the accumulator becomes lower as the elapsed time since execution of oil return control becomes longer.

In the above aspect, in the oil-equalizing control mode, it may be determined that the dilution level of the lubricating oil in the liquid refrigerant in the accumulator becomes higher as a period in which the suction superheat of the compressors is low becomes longer.

When the suction superheat of the compressors is low, it is understood that the superheat from the accumulator to the suction side of the compressors is low. This indicates that the amount of liquid refrigerant in the accumulator is large, which in turn indicates that the dilution level of the lubricating oil in the accumulator is relatively high. Therefore, it is possible to determine that the dilution level of the lubricating oil in the liquid refrigerant in the accumulator becomes higher as the period in which the suction superheat of the compressors is low becomes longer.

In the above aspect, in the oil-equalizing control mode, it may be determined that the dilution level of the lubricating oil in the liquid refrigerant in the accumulator becomes lower as the operating rotation speed becomes higher.

When the operating rotation speed of the compressors is high, a large amount of gas refrigerant is supplied from the accumulator to the suction side of the compressors. Thus, the decreased pressure promotes evaporation of the liquid refrigerant in the accumulator, so that the amount of liquid refrigerant decreases. Therefore, it is possible to determine that the dilution level of the lubricating oil in the liquid refrigerant in the accumulator is low.

In the above aspect, in the oil-equalizing control mode, it may be determined that the dilution level of the lubricating oil in the liquid refrigerant in the accumulator becomes lower as the outdoor air temperature becomes higher.

When the outdoor air temperature rises, the liquid refrigerant in the accumulator tends to evaporate and gasify, so that the amount of liquid refrigerant in the accumulator decreases. Therefore, it is possible to determine that the dilution level of the lubricating oil in the liquid refrigerant in the accumulator is low.

In the above aspect, in the oil-equalizing control mode, it may be determined that the dilution level of the lubricating oil in the compressors becomes lower as the internal superheat of compressor representing the superheat of the refrigerant inside the compressors becomes higher.

When the internal superheat of the compressors is high, it is indicated that the amount of refrigerant diluted in the lubricating oil is small. Therefore, it is possible to determine that the dilution level of the lubricating oil in the compressors is low.

According to the invention, the feedback work amount and the oil-equalizing work amount are set in accordance with the dilution of the lubricating oil in the accumulator and the compressors. That is, the feedback work and the oil-equalizing work do not become unnecessarily large. Thus, compared the case the setting is on the generally strictest for performing oil equalizing, the effect of oil equalizing control can be alleviated. Accordingly, considerable diminishment of comfort can be suppressed and entry into protective control can be prevented during oil equalizing control.

### BRIEF DESCRIPTION OF THE SEVERAL VIEWS OF THE DRAWINGS

Fig. 1 is a block diagram showing the refrigeration cycle of an air-conditioning apparatus according to an embodiment of the present invention;
Fig. 2 is a graph showing the relationship between the dilution ratio of lubricating oil in an accumulator and the amount of movement of the lubricating oil, with the outdoor air temperature as a parameter, in the refrigeration cycle according to the embodiment of the present invention, the dilution ratio being represented by the amount of refrigerant divided by the sum of the amount of refrigerant and the amount of lubricating oil;
Fig. 3 is a flowchart showing the flow of an oil-equalizing control mode in a case where the working time Ti of a feedback step and the working time To of an oil equalizing step are fixed;
Fig. 4 is a graph showing the relationship between a detected cumulative time Ts and a rotation speed Nac in the refrigeration cycle according to the embodiment of the present invention;
Fig. 5 is a graph showing the relationship between a superheat CSH and a rotation speed difference Nco in the refrigeration cycle according to the embodiment of the present invention;
Fig. 6 is a time chart of an oil equalizing operation in the refrigeration cycle according to the embodiment of the present invention;
Fig. 7 is a time chart of an oil equalizing operation in which a rotation speed Nmax and a rotation speed difference Ncox are fixed, whereas the working times Ti and To are changed, in the refrigeration cycle according to the embodiment of the present invention;
Fig. 8 is a graph showing the relationship between the detected cumulative time Ts and the working time Ti in the time chart shown in Fig. 7;
Fig. 9 is a graph showing the relationship between the superheat CSH and the working time To in the time chart shown in Fig. 7;
Fig. 10 is a graph showing the relationship between the rotation speeds of compressors and the amount of liquid refrigerant in the accumulator in another example of the oil-equalizing control mode according to the embodiment of the present invention; and
Fig. 11 is a graph showing the relationship between the outdoor air temperature and the amount of liquid refrigerant in the accumulator in another example of the oil-equalizing control mode according to the embodiment of the present invention.

### EXPLANATION OF REFERENCE

- 1:: Air-conditioning apparatus
- 3:: Outdoor unit
- 5:: Indoor units
- 13, 13A, 13B:: Compressors
- 29:: Accumulator
- 43, 43A, 43B:: Feedback piping
- 45:: Oil equalizing pipe
- 51:: Controller
- 53:: Oil-equalizing control mode
- Nac:: Rotation speed
- Nco:: Rotation speed difference

### DETAILED DESCRIPTION OF THE INVENTION

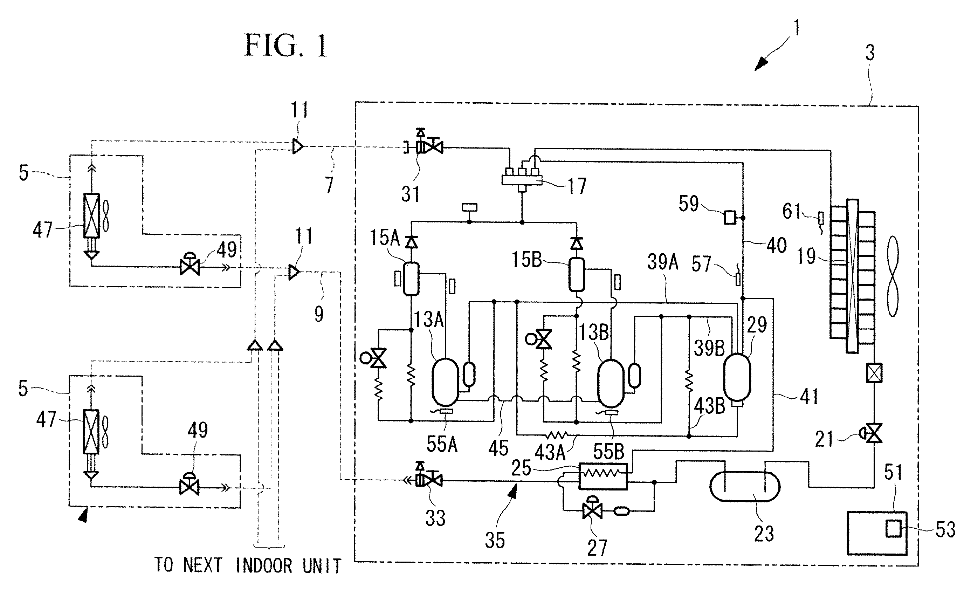

Now, a multiple-type air-conditioning apparatus 1 according to an embodiment of the present invention will be described in detail with reference to Figs. 1 to 11.
Fig. 1 is a block diagram showing the refrigeration cycle of the air-conditioning apparatus 1 according to this embodiment.
The air-conditioning apparatus 1 includes one outdoor unit 3, a plurality of indoor units 5, and a gas-side piping 7 and a liquid-side piping 9 interconnecting the outdoor unit 3 and the indoor units 5.

The outdoor unit 3 includes inverter-driven compressors 13 that compress refrigerant, oil separators 15 that separate lubricating oil from refrigerant gas, a four-way switching valve 17 that switches the circulation direction of refrigerant, an outdoor heat exchanger 19 that performs heat exchange between refrigerant and outdoor air, an outdoor electrically operated expansion valve for heating (EEVH) 21, a receiver 23 that stores liquid refrigerant, a supercooling heat exchanger 25 that supercools liquid refrigerant, a supercooling electrically operated expansion valve (EEVSC) 27 that controls the amount of refrigerant that is distributed to the supercooling heat exchanger 25, an accumulator 29 that separates liquid component from refrigerant gas that is buy the compressors 13 and accumulates liquid refrigerant, a gas-side service valve 31, and a liquid-side service valve 33.

A plurality of compressors 13, e.g., two compressors 13, are provided, which are configured so that their rotation speeds are adjusted by inverters that are not shown.
Depending on the performance required, in some cases the compressors 13 are operated simultaneously, and in other cases only one of the compressors 13 is operated while the other compressor 13 serves as a backup.
The above-described devices of the outdoor unit 3 are connected in a known manner via refrigerant piping, constituting an outdoor-side refrigerant circuit 35.

The gas-side piping 7 and the liquid-side piping 9 are refrigerant piping connected to the gas-side service valve 31 and the liquid-side service valve 33 of the outdoor unit 3, respectively. The lengths thereof are determined in accordance with the distances between the outdoor unit 3 and the plurality of indoor units 5 connected to the outdoor unit 3 at the time of on-site installation.
At intermediate portions of the gas-side piping 7 and the liquid-side piping 9, a number of branchers 11 are provided as needed, and a number of indoor units 5 as needed are connected individually via the branchers 11.

Low-pressure gas obtained through gas/liquid separation in the accumulator 29 is supplied to the suction side of the individual compressors 13 through suction piping 39 constituting refrigerant piping.
The refrigerant that passes through the supercooling electrically operated expansion valve 27 is supplied to the accumulator 29 via a branch piping 41.
Liquid refrigerant obtained through gas/liquid separation in the accumulator 29 is supplied to the individual suction piping 39 through feedback piping (supply pipes) having capillary tubes.
When it is necessary to distinguish between, for example, the two compressors 13, the two oil separators 15, the two suction piping 39, or the two feedback piping 43, suffixes "A" and "B" are attached for distinction after the numeral.
An oil-equalizing pipe 45 interconnecting the compressor 13A and the compressor 13B is provided.

A plurality of indoor units 5 are provided, and the individual indoor units 5 are configured identically.
Each of the indoor units 5 includes an indoor heat exchanger 47 that performs heat exchange between refrigerant and indoor air, thereby serving for indoor air conditioning, and an indoor expansion valve for cooling (EEVC) 49.

The air-conditioning apparatus 1 includes a controller 51 that controls the operation thereof. The controller 51 has an oil-equalizing control mode 53 for controlling an oil-equalizing operation so that the amounts of lubricating oil individually stored in the compressors 13A and 13B of the air-conditioning apparatus 1 are kept at or above a certain level .

Under the central parts of the compressors 13A and 13B, under-dome temperature sensors 55A and 55B for measuring temperatures outside the main units (domes) of the compressors 13A and 13B are provided.
At a gas return piping 40 extending back from the four-way switching valve 17 to the accumulator 29, an suction-pipe temperature sensor 57 and a low-pressure sensor 59 that measure the temperature and pressure of low-pressure refrigerant gas that is suctioned into the compressors 13 are provided.
On the outdoor-air suction side of the outdoor heat exchanger 19, an outdoor-air temperature sensor 51 that measures the temperature of intake outdoor air is provided.

The cooling and heating operations of the thus-configured air-conditioning apparatus 1 according to this embodiment will be described.
The cooling operation is performed as follows.
High-temperature and high-pressure refrigerant gas compressed by the compressors 13 is discharged from the compressors 13, and refrigerator oil included in the refrigerant is separated by the oil separators 15.
Then, the refrigerant gas passes through the four-way switching valve 17 and is subjected to heat exchange with outdoor air by the outdoor heat exchanger 19, whereby the refrigerant gas is condensed and liquefied. The resulting liquid refrigerant passes through the outdoor expansion valve 21 and is temporarily stored in the receiver 23.

The amount of liquid refrigerant that is circulated is adjusted by the receiver 23, and in the course of passage through the supercooling heat exchanger 25, part of the liquid refrigerant is distributed to the branch piping 41, and the distributed refrigerant is subjected to heat exchange with the refrigerant subjected to adiabatic expansion by the supercooling expansion valve (EEVSC) 27, whereby it is supercooled.
The liquid refrigerant is output from the outdoor unit 3 to the liquid-side piping 9 via the liquid-side service valve 33, and then the liquid refrigerant output to the liquid-side piping 9 is distributed to the individual indoor units 5 via the branchers 11.

The liquid refrigerant that has flowed into the indoor units 5 is subjected to adiabatic expansion by the indoor expansion valves (EEVC) 49, thereby becoming gas-liquid two-phase flows, which flow into the indoor heat exchangers 47.
In the heat exchangers 47, heat exchange takes place between the circulated indoor air and the refrigerant, whereby the indoor air becomes cooled for indoor cooling.
Meanwhile, the refrigerant is gasified and returns to the outdoor unit 3 via the gas-side piping 7.

The refrigerant gas that has returned to the outdoor unit 3 via the gas-side piping 7 is introduced into the accumulator 29 via the four-way switching valve 17.
In the accumulator 29, liquid components included in the refrigerant gas are separated, and only gas components are suctioned into the compressors 13 through the suction piping 39. The refrigerant is compressed again by the compressors 13. The cooling operation is performed by repeating the cycle described above.

On the other hand, the heating operation is performed as follows.
High-temperature and high-pressure refrigerant gas compressed by the compressors 13 is discharged from the compressors 13, refrigerator oil included in the refrigerant is separated by the oil separators 15, and the remaining refrigerant gas is supplied to the gas-side piping 7 via the four-way switching valve 17.
The refrigerant is output from the outdoor unit 3 via the gas-side service valve 31 and the gas-side piping 7 and is then introduced into the indoor units 5 via the branchers 11.

The high-temperature and high-pressure refrigerant gas introduced into the indoor units 5 is subjected to heat exchange with circulated indoor air by the indoor heat exchangers 47, whereby the indoor air is heated for indoor heating.
Meanwhile, the refrigerant is condensed, and the condensed refrigerant is returned to the outdoor unit 3 via the indoor expansion valves (EEVC) 49, the branchers 11, and the liquid-side piping 9.

The refrigerant that has returned to the outdoor unit 3 via the liquid-side piping 9 is delivered to the supercooling heat exchanger 25 via the liquid-side service valve 33. As opposed to the case of cooling, the supercooling expansion valve 27 is not constantly in operation, and supercooling is not performed in some cases. The refrigerant then flows into the receiver 23, where the refrigerant is temporarily stored, whereby the amount of circulation is adjusted.
The liquid refrigerant is subjected to adiabatic expansion by the outdoor expansion valve (EEVH) 21 and then flows into the outdoor heat exchanger 19.

The outdoor heat exchanger 19 performs heat exchange between the outdoor air that is fed thereto and the refrigerant, whereby the refrigerant absorbs heat from the outdoor air and is thereby evaporated.
The refrigerant is introduced into the accumulator 29 from the outdoor heat exchanger 19 via the four-way switching valve 17.
In the accumulator 29, liquid components included in the refrigerant gas are separated, and only gas components are suctioned into the compressors 13 via the suction piping 39. The refrigerant is again compressed by the compressors 13. The heating operation is performed by repeating the cycle described above.

Next, oil equalizing control will be described. The oil equalizing control includes a feedback step of setting the rotation speeds of the compressors 13A and 13B to a rotation speed (working rotation speed) Nac and supplying liquid refrigerant from the accumulator 29 to the compressors 13A and 13B and an oil equalizing step of increasing or decreasing the rotation speeds of the compressors 13A and 13B from an operating rotation speed Nv by a predetermined rotation speed difference (predetermined rotation speed) Nco so that the rotation speeds differ from each other, thereby making the amount of lubricating oil substantially equivalent between the compressors 13A and 13B through the oil equalizing pipe 45.

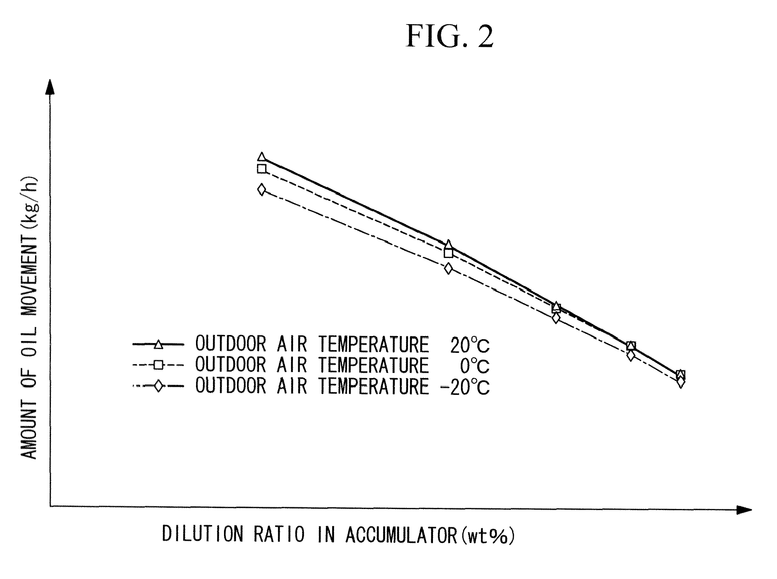

Fig. 2 is a graph showing the relationship between the dilution ratio (dilution level) of lubricating oil in the accumulator 29 and the amount of movement of the lubricating oil (oil), represented by the amount of refrigerant divided by the sum of the amount of refrigerant and the amount of lubricating oil, using the outdoor temperature as a parameter.
As will be understood from the graph, as the dilution ratio becomes lower, the amount of movement of the lubricating oil increases, i.e., it becomes easier for the lubricating oil to move. Furthermore, as the outdoor air temperature becomes higher, the amount of movement of the lubricating oil increases, i.e., it becomes easier for the lubricating oil to move. This also applies to lubricating oil containing the refrigerant, accumulated inside the compressors 13.

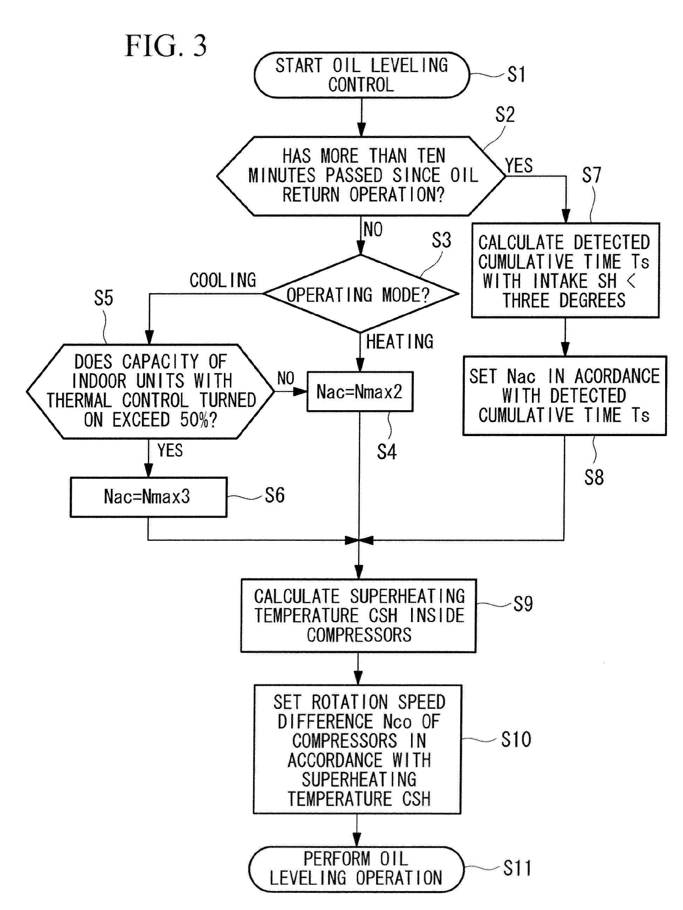

Fig. 3 shows a partial flow of the oil-equalizing control mode 53 in an example where the working time Ti of the feedback step and the working time To of the oil equalizing step are fixed.
In the oil-equalizing control mode 53, upon starting the oil equalizing control (step S1), the process enters a step of calculating the working rotation speed Nac of the feedback step.
In this step, first, it is determined whether the elapsed time after an oil return operation exceeds 10 minutes (step S2).

When the elapsed time is within 10 minutes (NO), since a large amount of refrigerant has returned to the accumulator 29 through the oil return operation together with the lubricating oil, assuming that a sufficient amount of refrigerant remains, it is determined that the dilution ratio of the lubricating oil in the accumulator 29 is high.
In this case, in the oil-equalizing control mode 53, the operation mode of the air-conditioning apparatus 1 is determined (step S3). If the operation mode is the heating mode, since a large amount of refrigerant certainly returns to the accumulator 29, it is determined that the dilution ratio of the lubricating oil in the accumulator 29 is high, so that the rotation speed Nac is set to a constant value Nmax2 (step S4).

If the operation mode is the cooling mode, it is determined whether the capacity of indoor units 5 with thermal control turned on (during cooling operation) during the oil equalizing control exceeds 50% of the total capacity (step S5).
If the capacity of the indoor units 5 with thermal control turned on is within 50% of the total capacity (NO), in step S4, the rotation speed Nac is set to the constant value Nmax2.
On the other hand, if it is determined in step S5 that the capacity of the indoor units 5 with thermal control turned on exceeds 50% of the total capacity (YES), the rotation speed Nac is set to a constant value Nmax3 (Step S6). Nmax3 is a value less than Nmax2.
Even in indoor units 5 with thermal control turned off, the electrically operated expansion valves 49 are slightly opened, so that the refrigerant flows. The refrigerant that flows at this time has a high humidity. When the number of indoor units 5 stopped is large in step S5, superheat of the gas piping decrease, so that the dilution ratio becomes high.

When the elapsed time exceeds 10 minutes (YES), it is determined that, since a large amount of refrigerant returned to the accumulator 29 through the oil return operation is supplied to the compressors 13, the dilution ratio of the lubricating oil in the accumulator 29 is low. For example, in the case where a sufficient amount of lubricating oil was not attained through oil equalizing control performed after an oil return operation, oil equalizing control may be performed alone. For example, the oil equalizing control is performed 30 minutes after the previous oil equalizing control.
In this case, in the oil-equalizing control mode 53, a detected cumulative time Ts is calculated, which represents a cumulative time that it took the suction superheat (suction SH) of the compressors 13 to become less than three degrees since the previous oil equalizing control (step S7).

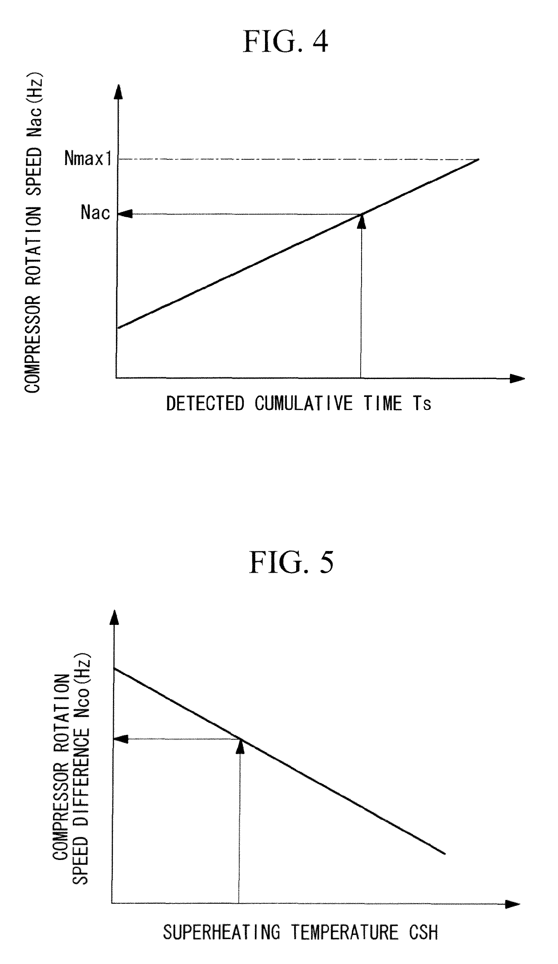

The suction SH is obtained by subtracting the saturation temperature at the pressure detected by the low-pressure sensor 59 from the temperature detected by the suction-pipe temperature sensor 57. A low value of the suction SH indicates that the refrigerant has returned to the accumulator 29 during operation. Thus, it is determined that the dilution level of the lubricating oil in the liquid refrigerant in the accumulator 29 becomes higher as the detected cumulative time Ts becomes longer.
Therefore, the detected cumulative time Ts and the rotation speed Nac have the relationship shown in Fig. 4. In the oil-equalizing control mode 53, Nac corresponding to the detected cumulative time Ts calculated in step S7 is set (step S8). Since the detected cumulative time Ts has an upper limit, for example, 30 minutes, the rotation speed Nac has an upper limit Nmax1.
Among the values of Nac, Nmax2 is the greatest, Nmax3 is the next greatest, and Nmax1 is the smallest value.

Then, in the oil-equalizing control mode 53, the process enters a step of calculating a rotation speed difference Nco of the oil equalizing step. In this step of the oil-equalizing control mode 53, the superheat CSH inside the compressors 13 is detected (step S9). The superheat CSH is represented by a value obtained by subtracting the saturated temperature at the pressure detected by the low-pressure sensor 59 from the temperature detected by the under-dome temperature sensor 55.
A low value of the superheat CSH indicates that liquid refrigerant has been supplied to the compressors 13 during operation. Thus, it is possible to determine that the dilution level of the lubricating oil in the liquid refrigerant in the compressors 13 becomes lower as the superheat CSH increases.

Therefore, the superheat CSH and the rotation speed difference Nco have the relationship shown in Fig. 5. In the oil-equalizing control mode 53, a rotation speed difference Nco corresponding to the superheat CSH detected in step S9 is set (step S10).
In the oil-equalizing control mode 53, an oil equalizing operation is performed with the rotation speed Nac and the rotation speed difference Nco set as described above (step S11).

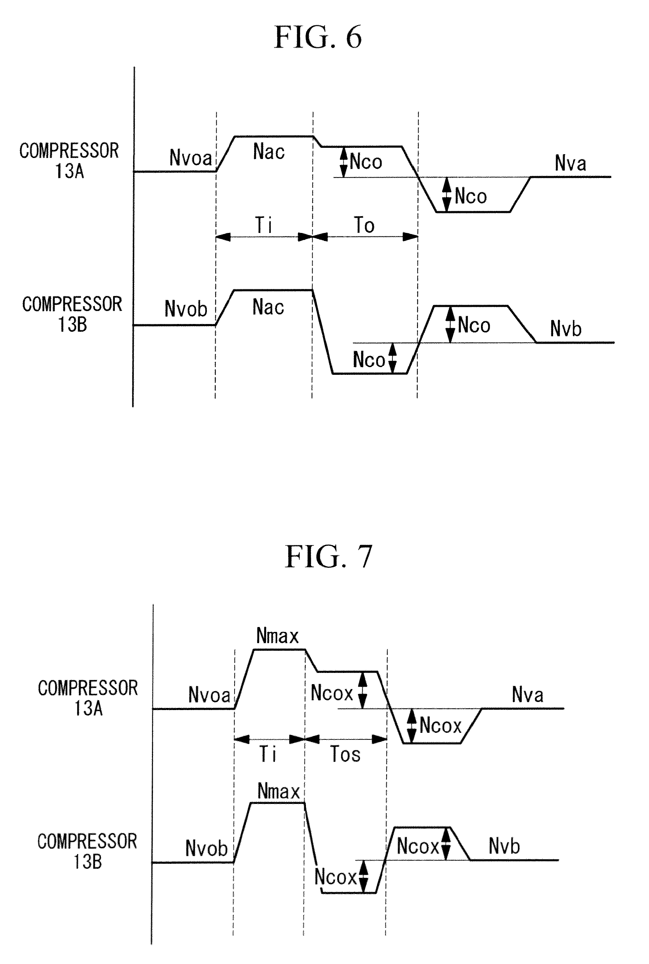

The oil equalizing operation will be described based on a time chart shown in Fig. 6. Note that the compressors 13A and 13B are operating at rotation speeds Nvoa and Nvob. Under this condition, in the oil-equalizing control mode 53, the compressors 13A and 13B are operated at the set rotation speed Nac during the working time Ti of the feedback step, whereby liquid refrigerant in the accumulator 29 is fed back to the compressors 13A and 13B.
Then, during the working time To of the oil equalizing step, the compressor 13A is operated at a rotation speed obtained by adding the rotation speed difference Nco to the planned rotation speed Nva, and the compressor 13B is operated at a rotation speed obtained by subtracting the rotation speed difference Nco from the planned rotation speed Nvb. Then, the compressor 13A is operated at a rotation speed obtained by subtracting the rotation speed difference Nco from the planned rotation speed Nva, and the compressor 13B is operated at a rotation speed obtained by adding the rotation speed difference Nco to the planned rotation speed Nvb.

Since the rotation speed Nac is set in accordance with an estimated dilution ratio of the lubricating oil in the accumulator 29 as described above, the rotation speed Nac of the compressors 13 in the feedback step does not become unnecessarily large. For example, the rotation speed Nac that is set here is less than Nmax2, which is set based on generally the strictest conditions for performing oil equalizing.
Since the rotation speed difference Nco is set in accordance with the estimated dilution ratio of the lubricating oil in the compressors 13, the rotation speeds of the compressors 13 in the oil equalizing step do not vary unnecessarily from the operating rotation speed.

Thus, the feedback work amount, which is represented by the product of the rotation speed Nac indicating the performance of the compressors 13 per unit time and the working time Ti of the feedback step, can be reduced even if the working time Ti is the same. Furthermore, the oil-equalizing work amount, represented by the product of the rotation speed difference Nco indicating the change in the performance of the compressors 13 per unit time and the working time To of the oil equalizing step, can be reduced even if the working time To is the same.
Therefore, it is possible to change the feedback work amount and the oil-equalizing work amount by changing the working rotation speed and the predetermined rotation speed.

As described above, the rotation speed Nac and the rotation speed difference Nco are set in accordance with the dilution level of the lubricating oil in the accumulator 29 and the compressors 13; that is, the feedback work amount and the oil-equalizing work amount do not become unnecessarily large. Thus, compared with the case where the setting is based on conditions that are generally the strictest for performing oil equalizing, variation of the rotation speed can be suppressed, so that the effect attributable to considerable variation of the rotation speed can be alleviated. Accordingly, it is possible to suppress considerable diminishment of comfort and to prevent entry into protective control during oil equalizing control.

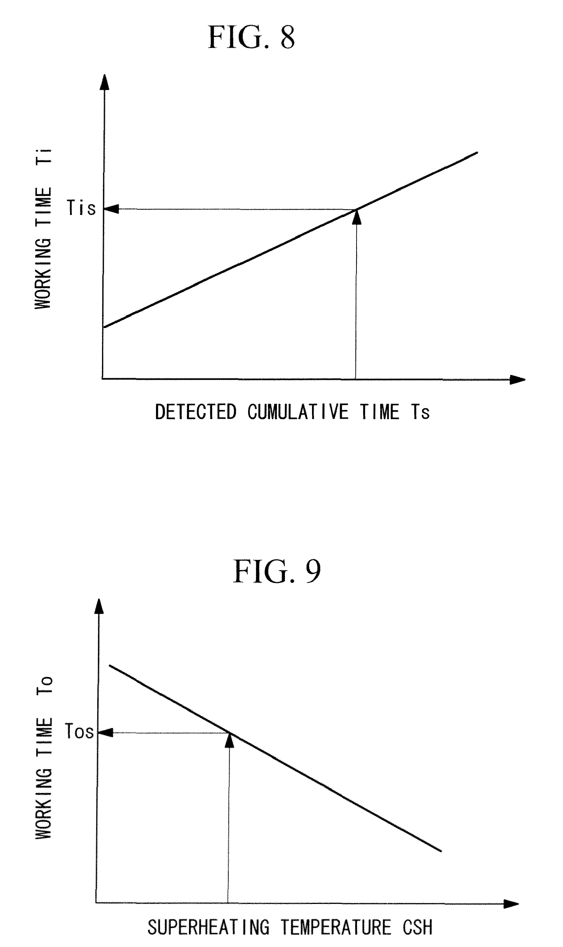

Although the feedback work amount and the oil-equalizing work amount are changed by changing the rotation speed Nac and the rotation speed difference Nco in this embodiment, alternatively, the working times Ti and To may be changed while keeping the rotation speed Nmax and the rotation speed Ncox constant, as shown in Fig. 7.
That is, in the oil-equalizing control mode 53, since it is possible to determine that the dilution level of the lubricating oil in the liquid refrigerant in the accumulator 29 becomes higher as the detected cumulative time Ts becomes longer, the detected cumulative time Ts and the working time Ti have the relationship shown in Fig. 8. In the oil-equalizing control mode 53, a working time Tis corresponding to the detected cumulative time Ts calculated in step S7 shown in Fig. 3 is set.

In the oil-equalizing control mode 53, since it is possible to determine that the dilution level of the lubricating oil in the liquid refrigerant in the compressors 13 becomes lower as the superheat CSH increases, the superheat CSH and the working time To have the relationship shown in Fig. 9. In the oil-equalizing control mode 53, a working time Tos corresponding to the superheat CSH detected in step S9 is set.
As described above, the working time Tis of the feedback step and the working time Tos of the oil equalizing step are set in accordance with the dilution level of the lubricating oil in the accumulator 29 and the compressors 13; that is, the feedback work amount and the oil-equalizing work amount do not become unnecessarily large. Thus, compared with the case where the setting is based on generally the strictest conditions for performing oil equalizing, the working times can be reduced, so that the effect attributable to considerable variation of the rotation speed can be alleviated. Accordingly, it is possible to suppress considerable diminishment of comfort and to prevent entry into protective control during oil-equalizing control.

Although the rotation speed Nac in the feedback step is calculated based on the detected cumulative time Ts representing the cumulative time of periods when the suction SH is less than three degrees in this embodiment, by considering the following relationship in addition, it is possible to estimate the dilution ratio of the lubricating oil in the accumulator 29 more precisely.

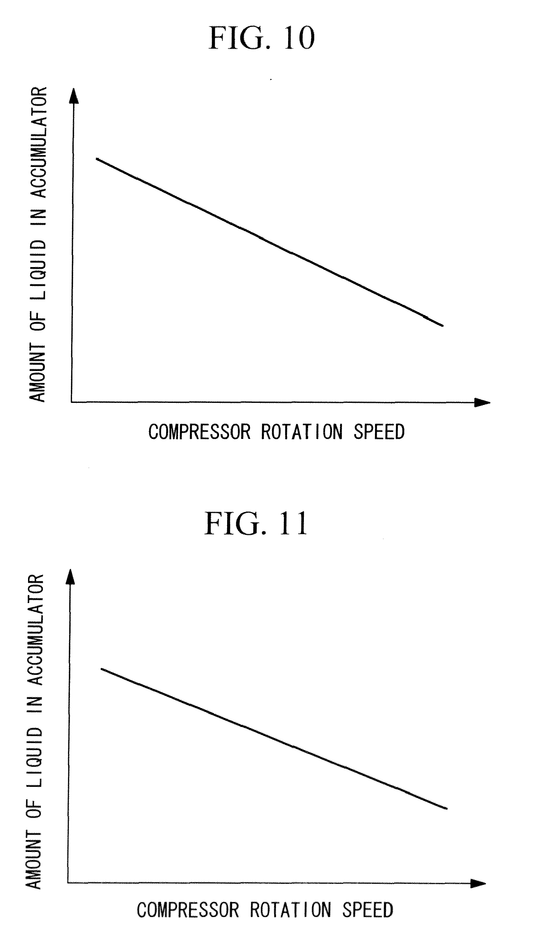

That is, when the operating rotation speed of the compressors 13 is high, the amount of gas refrigerant supplied from the accumulator 29 to the suction side of the compressors 13 becomes large, so that the liquid refrigerant in the accumulator 29 is transformed into gas refrigerant, whereby the amount of liquid refrigerant decreases.
Thus, the dilution level of the lubricating oil in the liquid refrigerant in the accumulator 29 becomes lower. The rotation speed of the compressors 13 and the amount of liquid refrigerant in the accumulator 29 have the relationship shown in Fig. 10.

When the outdoor air temperature rises, gasification of the refrigerant in the accumulator 29 progresses, so that the amount of liquid refrigerant in the accumulator 29 decreases. Thus, when the outdoor air temperature rises, the dilution level of the lubricating oil in the liquid refrigerant in the accumulator 29 becomes lower. The outdoor air temperature and the amount of liquid refrigerant in the accumulator 29 have the relationship shown in Fig. 11.

Furthermore, the height of liquid in the accumulator 29 may be measured to approximately calculate the amount of lubricating oil and the amount of liquid refrigerant in the accumulator 29. Generally, it is possible to estimate that the amount of liquid refrigerant becomes larger as the liquid height increases, indicating that the dilution ratio of the lubricating oil is higher.

The present invention is not limited to the embodiments described hereinabove, and various modifications may be made without departing from the spirit of the present invention.
For example, although the two compressors 13 are provided in the one outdoor unit 3, application to a plurality of outdoor units 3 each having two compressors 13 or a plurality of outdoor units 3 each having one compressor 13 is possible.

## Claims

1. An air-conditioning apparatus **characterized in that** it comprises:
a plurality of compressors (13, 13A, 13B) with variable rotation speeds, connected with each other via an oil equalizing pipe (45);
an accumulator (29) that separates a liquid component from refrigerant gas suctioned into a suction side of the compressors (13, 13A, 13B) and that stores liquid refrigerant including lubricating oil;
a supply pipe (43, 43A, 43B) that gradually supplies the liquid refrigerant stored in the accumulator (29) to the suction side of the compressors (13, 13A, 13B) ; and
a controller (5) that controls operation, having an oil-equalizing control mode (53) in which the amounts of lubricating oil stored individually in the plurality of compressors (13, 13A, 13B) are kept at or above a certain level,
wherein the oil-equalizing control mode (53) includes a feedback step of setting the rotation speeds of the compressors (13, 13A, 13B) to a working rotation speed and supplying the liquid refrigerant from the accumulator (29) to the individual compressors, and an oil equalizing step of increasing or decreasing the rotation speeds of the compressors from an operating rotation speed by a predetermined rotation speed so that the rotation speeds differ from each other, thereby making the amounts of lubricating oil in the compressors substantially equivalent to each other via the oil equalizing pipe (45), the feedback work amount of the feedback step being changed in accordance with the dilution level of the lubricating oil in the liquid refrigerant in the accumulator (29), the oil-equalizing work amount of the oil equalizing step being changed in accordance with the dilution level of the lubricating oil in the compressors (13, 13A, 13B).

2. An air-conditioning apparatus (1) according to Claim 1, wherein, in the oil-equalizing control mode, the feedback work amount and the oil-equalizing work amount are changed by changing the working rotation speed and the predetermined rotation speed.

3. An air-conditioning apparatus (1) according to Claim 1 or 2, wherein, in the oil-equalizing control mode, the feedback work amount and the oil-equalizing work amount are changed by changing the working time of the feedback step and the working time of the oil equalizing step.

4. An air-conditioning apparatus (1) according to any one of Claims 1 to 3, wherein, in the oil-equalizing control mode (53), it is determined that the dilution level of the lubricating oil in the liquid refrigerant in the accumulator (29) becomes lower as the elapsed time since execution of oil return control becomes longer.

5. An air-conditioning apparatus (1) according to any one of Claims 1 to 4, wherein, in the oil-equalizing control mode (53), it is determined that the dilution level of the lubricating oil in the liquid refrigerant in the accumulator (29) becomes higher as a period in which the suction superheat of the compressors (13, 13A, 13B) is low becomes longer.

6. An air-conditioning apparatus (1) according to Claim 5, wherein, in the oil-equalizing control mode (53), it is determined that the dilution level of the lubricating oil in the liquid refrigerant in the accumulator (29) becomes lower as the operating rotation speed becomes higher.

7. An air-conditioning apparatus (1) according to Claim 5 or 6, wherein, in the oil-equalizing control mode (53), it is determined that the dilution level of the lubricating oil in the liquid refrigerant in the accumulator (29) becomes lower as the outdoor air temperature becomes higher.

8. An air-conditioning apparatus (1) according to any one of Claims 1 to 7, wherein, in the oil-equalizing control mode (53), it is determined that the dilution level of the lubricating oil in the compressors (13, 13A, 13B) becomes lower as the internal degree of superheat representing the degree of superheat of the refrigerant inside the compressors becomes higher.
